# EUROPÄISCHE PATENTANMELDUNG

(11) **EP 4 585 442 A1**
(43) Veröffentlichungstag der Anmeldung: **16.07.2025**
(21) Anmeldenummer: 24220779.3
(22) Anmeldetag: 17.12.2024
(51) Int. Cl.: B60K 35/10, B60K 35/50

(54) **TECHNIK ZUR HERSTELLUNG EINES KONFIGURIERBAREN BEDIENBEREICHS EINER INSTRUMENTENTAFEL EINES KRAFTFAHRZEUGS**

(30) Priorität: 11.01.2024 DE 102024100695
(71) Anmelder: MAN Truck & Bus SE, 80995 München (DE)
(72) Erfinder: Harsandi, Veronika, 80995 München (DE); Kremser, Florian, 80995 München (DE); Maier, Marius, 80995 München (DE); Mohra, Holger, 80995 München (DE)

(57) **Zusammenfassung**

Die Erfindung betrifft ein Verfahren (1) zur Herstellung und einen Modulbaukasten (9) zur Bereitstellung eines konfigurierbaren Bedienbereichs (2) im Bereich einer Instrumententafel (4) eines Kraftfahrzeugs (3), vorzugsweise Nutzfahrzeugs. Das Verfahren (1) umfasst eine Bereitstellung (S20) einer Instrumententafel (4) des Kraftfahrzeugs (3), wobei die Instrumententafel (4) einen vorbestimmten Anbaubereich (5) zur Realisierung des konfigurierbaren Bedienbereichs (2) aufweist. Der Anbaubereich (5) weist eine Befestigungsschnittstelle (7) zur mechanischen Halterung eines Anbau-Bedienmoduls (6) und eine Strom- und/oder Datenschnittstelle (8) für das Anbau-Bedienmodul (6) auf. Weiter umfasst das Verfahren (1) eine Bereitstellung (S40) eines Modulbaukastens (9), umfassend mehrere unterschiedliche Anbau-Bedienmodule (6a; 6c; 6e), die an der Befestigungsschnittstelle (7) halterbar und mit der Strom- und/oder Datenschnittstelle (8) verbindbar sind. Außerdem umfasst das Verfahren ein Auswählen (S60) eines Anbau-Bedienmoduls (6a; 6c; 6e) aus dem Modulbaukasten (9), eine Halterung des ausgewählten Anbau-Bedienmoduls (6a; 6c; 6e) an der Befestigungsschnittstelle (7) und Verbindung des ausgewählten Anbau-Bedienmoduls (6a; 6c; 6e) mit der Strom- und/oder Datenschnittstelle (8) des Anbaubereichs (5). Die Erfindung betrifft ferner ein Kraftfahrzeug (3) umfassend einen konfigurierbaren Bedienbereich (2) im Bereich einer Instrumententafel (4) des Kraftfahrzeugs (3). Die vorgestellte Technik ermöglicht eine flexible und kostengünstige Gestaltung eines Bedienbereichs zur Erfüllung verschiedener Aufgaben im Bereich des Kraftfahrzeugs.

## Beschreibung

Die Erfindung betrifft eine Technik zur Herstellung eines konfigurierbaren Bedienbereichs einer Instrumententafel eines Kraftfahrzeugs. Bei dem Kraftfahrzeug handelt es sich vorzugsweise um ein Nutzfahrzeug. Der konfigurierbare Bedienbereich ist bevorzugt ein Bedienbereich zur Steuerung von Aufbauerfunktionen und/oder von Nebenaggregaten des Nutzfahrzeugs.

Moderne Kraftfahrzeuge können heutzutage mit einer Vielzahl unterschiedlicher Komponenten und Zusatzfunktionen ausgestattet werden, die nicht für den reinen Fahrbetrieb benötigt werden. Auf diese Weise kann die Ausstattung des Kraftfahrzeugs an die individuellen Bedürfnisse der jeweiligen Nutzer angepasst werden. Insbesondere Nutzfahrzeuge, die zur Erledigung bestimmter Arbeiten bzw. Aufgaben verwendet werden, können mit unterschiedlichen Aufbauten (auch als Aufbauerfunktionen bezeichnet) und Zusatz-/Nebenaggregaten (z. B. Betonmischern, Drehleitern, Bürstenaufsätzen, Kühlaggregaten, ...) ausgestattet und/oder nachgerüstet werden.

In vielen Fällen benötigen diese Zusatzaufbauten bzw. Zusatzaggregate für Nutzfahrzeuge vom Cockpit aus bedienbare Bedienelemente, die nicht ab Werk verbaut werden (können). Kunden müssen bei Kauf des Nutzfahrzeugs und bei Bedarf an weiteren Aufbauerfunktionen zusätzlichen Aufwand betreiben, um diese zu integrieren. Zur Bedienung der Zusatzaufbauten bzw. der Zusatzaggregate muss entsprechend ein zusätzlicher Bedienbereich im Bereich der Instrumententafel bereitgestellt und/oder konfiguriert werden. Dies beinhaltet oftmals das Öffnen der Instrumenten-Tafel, die Integration von zusätzlichen Kabelsträngen und zusätzlicher Bedienelemente, um Aufbauerfunktionen vom Cockpit-Bereich aus steuern zu können.

Das Bereitstellen zusätzlicher Bedienelemente (Joysticks, Taster, Tablets, Fernbedienungen, ...) für die Aufbauerfunktionen im Bereich der Instrumententafel benötigt viel Platz und kann ggf. die direkte Sicht nach draußen einschränken. Nutzfahrzeuge verfügen ohnehin über eine Vielzahl an standardmäßig verbauten Taster und/oder Bedienfunktionen. Zusätzliche Bediengeräte und/oder -elemente für Aufbauerfunktionen erhöhen die Komplexität der Bedienung weiter.

Bei aus der Praxis bekannten Ansätzen führt dies im Ergebnis zu unübersichtlichen Cockpit-Bereichen durch viele Zusatzgeräte und nachträglich verbaute Bedienteile zur Steuerung der Aufbauerfunktionen. Dies ist ferner verbunden mit hohen Werkstattkosten und langen Durchlaufzeiten zur Nachrüstung der Aufbauerfunktionen. Bediengeräte werden zudem nicht immer sicher und sachgemäß angebracht (z. B. Anschrauben von Geräten an ungeeigneten Stellen). Nachteilhaft sind ferner die vielen zusätzlichen Stromkabel im Fahrzeuginnenraum.

Entsprechend liegt daher der Erfindung die Aufgabe zugrunde, eine verbesserte Technik zur Herstellung eines konfigurierbaren Bedienbereichs einer Instrumententafel eines Kraftfahrzeugs bereitzustellen, mit der möglichst die Nachteile der bisherigen Lösung vermieden werden können. Insbesondere ist es dabei eine Aufgabe der Erfindung, eine Technik bereitzustellen, mit der ein konfigurierbarer Bedienbereich im Cockpit-Bereich zur Steuerung von Aufbauerfunktionen eines Kraftfahrzeugs mit verringertem Aufwand hergestellt werden kann.

Diese Aufgaben werden durch Verfahren und Vorrichtungen mit den Merkmalen der unabhängigen Ansprüche gelöst. Vorteilhafte Weiterbildungen sind in den abhängigen Ansprüchen und der Beschreibung angegeben.

Gemäß einem ersten allgemeinen Gesichtspunkt der vorliegenden Offenbarung wird ein Verfahren zur Herstellung eines konfigurierbaren Bedienbereichs im Bereich einer Instrumententafel eines Kraftfahrzeugs bereitgestellt. Ein konfigurierbarer Bedienbereich kann ein Bedienbereich sein, dessen Bedienelemente und/oder Bedienfunktionen anpassbar, einstellbar und/oder auswählbar sind. Das Kraftfahrzeug ist vorzugsweise ein Nutzfahrzeug. Der konfigurierbare Bedienbereich ist vorzugsweise ein Bedienbereich zur Steuerung von Aufbauerfunktionen (d. h. Funktionen von Aufbauten, die auf dem Nutzfahrzeug angebracht sind) und/oder ein Bedienbereich zur Steuerung von Nebenaggregaten des Nutzfahrzeugs.

Das Verfahren umfasst eine Bereitstellung einer Instrumententafel des Kraftfahrzeugs. Die Instrumententafel eines Kraftfahrzeugs, auch als Armaturenbrett oder Schalttafel bezeichnet, erstreckt sich typischerweise im Wesentlichen von der rechten bis zur linken Seitenwand des Kraftfahrzeugs und umfasst Anzeigen und Bedienelemente, die für die Steuerung des Fahrzeugs üblicherweise notwendig sind.

Die Instrumententafel weist hierbei einen vorbestimmten Bereich, vorzugsweise zur Realisierung des konfigurierbaren Bedienbereichs, auf. Dieser vorbestimmte Bereich, nachfolgend als Anbaubereich bezeichnet, weist eine Befestigungsschnittstelle zur mechanischen Halterung eines Anbau-Bedienmoduls und eine Strom- und/oder Datenschnittstelle für das Anbau-Bedienmodul auf. Der Anbaubereich kann neben der Befestigungsschnittstelle z. B. auch nur eine Stromschnittstelle zur Stromversorgung eines Anbau-Bedienmoduls aufweisen, wenn z. B. die Datenübertragung von und mit dem Anbau-Bedienmodul drahtlos erfolgt. Der Anbaubereich kann beispielsweise ein vorbestimmter Bereich der Instrumententafel sein, der im Greif- und Sichtraum des Fahrers verortet ist.

Weiter umfasst das Verfahren eine Bereitstellung eines Modulbaukastens. Der Modulbaukasten umfasst mehrere unterschiedliche Bedienvorrichtungen zum Anbau an dem vorbestimmten Anbaubereich der Instrumententafel. Die Bedienvorrichtungen werden in diesem Dokument als Anbau-Bedienmodule bezeichnet. Die Anbau-Bedienmodule sind an der Befestigungsschnittstelle halterbar und mit der Strom- und/oder Datenschnittstelle verbindbar. Dies bedeutet, dass jedes der Anbau-Bedienmodule eine zur der Befestigungsschnittstelle des Anbaubereichs korrespondierende Befestigungsschnittstelle und eine zu der Strom- und/oder Datenschnittstelle des Anbaubereichs korrespondierende Strom- und/oder Datenschnittstelle aufweist. Die Anbau-Bedienmodule sind bevorzugt Anbau-Bedienmodule zur Steuerung und/oder zur Bedienung von Aufbauerfunktionen, von Nebenaggregatsfunktionen (Zusatzaggregatsfunktionen) und/oder von Arbeitsfunktionen des Kraftfahrzeugs. Der Modulbaukasten stellt somit unterschiedliche (Arten von) Anbau-Bedienmodule bereit, die wahlweise an dem vorbestimmten Anbaubereich der Instrumententafel angebaut werden können. Der Modulbaukasten kann daher auch als Vorrichtung zur modularen Bereitstellung unterschiedlicher Anbau-Bedienmodule bezeichnet werden.

Ferner umfasst das Verfahren ein Auswählen eines Anbau-Bedienmoduls aus dem Modulbaukasten, eine Halterung des ausgewählten Anbau-Bedienmoduls an der Befestigungsschnittstelle und eine Verbindung des ausgewählten Anbau-Bedienmoduls mit der Strom- und/oder Datenschnittstelle des Anbaubereichs.

Vorteilhaft bietet das erfindungsgemäße Verfahren die Möglichkeit, eine Instrumententafel eines Kraftfahrzeugs modular und flexibel um einen konfigurierbaren Bedienbereich zu erweitern, in dem ein geeignetes Anbau-Bedienmodul aus dem Modulbaukasten ausgewählt und am vorbestimmten Anbaubereich angebaut, z. B. gehaltert, wird. Dies bietet eine einfache und mit geringem Aufwand verbundene Möglichkeit, um zusätzliche und/oder nachträglich benötigte Bedienelemente und/oder Bedienfunktionen in die Instrumententafel zu integrieren, vorzugsweise zur Steuerung von Aufbauten, Nebenaggregaten und/oder von Arbeitsfunktionen des Kraftfahrzeugs. Die an dem Anbaubereich vorgesehenen Schnittstellen ermöglichen eine schnelle mechanische Halterung und Anbindung an eine Stromversorgung und/oder Datenkommunikation, ohne dass hierfür zusätzliche Halterungen angebracht, Leitungen verlegt oder die Instrumententafel geöffnet werden müsste.

Weiter ist die vorgeschlagene Möglichkeit zur Integration der Anbau-Bedienmodule besonders sicher, da das Anbau-Bedienmodul an einer explizit hierfür vorgesehenen Stelle unter Verwendung von hierfür vorgesehenen Schnittstellen angebracht wird. Dem Nutzer wird darüber hinaus ein hoher Grad an Flexibilität bereitgestellt, den Bedienbereich nach individuellen Anforderungen zu konfigurieren, sodass unangemessen verbaute Zusatzgeräte im Cockpit-Bereich und insbesondere im Sichtbereich des Fahrers vermieden oder zumindest reduziert werden können. Insgesamt kann dadurch auch die Fahrsicherheit erhöht werden.

In einem Ausführungsbeispiel umfassen die mehreren unterschiedlichen Anbau-Bedienmodule zumindest eines, vorzugsweise zumindest zwei, der folgenden Anbau-Bedienmodule:
- Ein Anbau-Bedienmodul mit einem schwenkbaren Bedienhebel, vorzugsweise mit einem Joystick;
- ein Anbau-Bedienmodul, aufweisend einen Not-Aus-Schalter, vorzugsweise zum Ausschalten eines Nebenaggregats und/oder einer Aufbauer-Funktion eines Nutzfahrzeugs;
- ein Anbau-Bedienmodul, aufweisend eine Halterung für ein Mobilgerät, beispielweise eine Smartphone oder ein Tablet-Computer;
- ein Anbau-Bedienmodul, aufweisend mehrere Tasten, vorzugsweise Hubtasten und/oder Display-Tasten; und
- ein Anbau-Bedienmodul, aufweisend mehrere Tasten, vorzugsweise Hubtasten und/oder Display-Tasten, und einen Not-Aus-Schalter, vorzugsweise zum Ausschalten eines Nebenaggregats und/oder einer Aufbauer-Funktion eines Nutzfahrzeugs.

Mit einem Modulbaukasten, der die vorgenannten Anbau-Bedienmodule oder eine Teilmenge hiervon als Auswahl anbietet, können vorteilhaft auf flexible Weise eine große Anzahl unterschiedlicher Bedienbereiche konfiguriert werden, insbesondere zur Steuerung von Aufbauten, Nebenaggregaten oder von Arbeitsfunktionen von Nutzfahrzeugen. Umfasst der Aufbau z. B. einen verschwenkbaren Arbeitsarm oder einen Arbeitskran, kann ein Anbau-Bedienmodul mit einem Joystick aus dem Modulbaukasten zur Konfiguration des Bedienbereichs ausgewählt werden, um auf diese Weise eine intuitive Steuerung zu ermöglichen. Falls ein Aufbau-Hersteller oder Nebenaggregat-Hersteller ein eigenes Mobilgerät, z. B. ein Tablet-Computer, als Bedienvorrichtung bereitstellt, kann z. B. vorteilhaft das Anbau-Bedienmodul, aufweisend eine Halterung für ein Mobilgerät, ausgewählt werden, um das Mobilgerät zu haltern und es gleichzeitig über die Schnittstellen des Anbaubereichs an eine Stromversorgung und/oder eine Datenkommunikation des Kraftfahrzeugs anzuschließen.

Ferner kann der Modulbaukasten Anbau-Bedienmodule umfassen, die eine beliebige Kombinationen der zuvor genannten Merkmale und/oder Bedienelemente aufweisen. Beispielsweise kann der Modulbaukasten ein Anbau-Bedienmodul aufweisen, das zumindest zwei der folgenden Elemente aufweist: einen schwenkbaren Bedienhebel, einen Not-Aus-Schalter, eine Halterung für ein Mobilgerät, und eine oder mehrere Tasten, vorzugsweise Hubtasten und/oder Display-Tasten. Ferner kann der Modulbaukasten ein Anbau-Bedienmodul umfassen, welches mindestens eine Halterung für ein Bedienelement aufweist, so dass das Anbau-Bedienmodul selbst konfigurierbar ist, z. B: mit unterschiedlichen Bedienelementen, die Teil des Modulbaukastens sein können, bestückbar ist. Beispiele für solche Bedienelemente können wiederum Taster, z. B. Display-Taster, NOT-Aus-Schalter, Bedienhebel, Drehschalter etc. sein.

Displaytasten sind Tasten, bei denen ein Display z. B. auf einer Oberseite der Tasten angeordnet ist, auf dem ein der jeweiligen Funktion zugeordnetes Symbol oder ein kurzer Schriftzug angezeigt werden, sodass der Benutzer schnell die gewünschte Funktion findet, und eine übermäßige Ablenkung vermieden werden kann. Ein Not-Aus-Schalter ist ein Schalter oder Taster, der entsprechend als solcher beschriftet ist, und dessen Betätigung eine Not-Aus-Funktion im zugeordneten Nebenaggregat oder der Aufbauer-Funktion auslöst. Ein Not-Aus-Schalter in Griffweite des Fahrers kann beispielsweise aufgrund von gesetzlichen Vorschriften gefordert sein, um im Notfall ein schnelles Abschalten z. B. eines Nebenaggregats zu ermöglichen. Eine Integration des Not-Aus-Schalters in das Anbau-Bedienmodul ist für den Nutzer besonders komfortabel und kann aufgrund einer guten Erreichbarkeit die Sicherheit erhöhen.

Weiter können die Anbau-Bedienmodule weitere Bedienelemente, zusätzlich zu den zuvor genannten Bedienelementen, umfassen. Unter Bedienelementen werden jegliche Elemente verstanden, mit denen ein Nutzer interagieren kann, um eine bestimmte Aufgabe zu erfüllen.

Gemäß einer weiteren Ausführungsform können die unterschiedlichen Anbau-Bedienmodule jeweils einen plattenförmigen Grundkörper aufweisen, der vorzugsweise für alle unterschiedlichen Anbau-Bedienmodule die gleiche Länge und/oder Höhe aufweist. Ein plattenförmiger Grundkörper zeichnet sich dadurch aus, dass er eine geringere Tiefe als Höhe und Breite aufweist. Auf einem solchen Grundkörper lassen sich besonders gut und übersichtlich auch sehr unterschiedliche Bedienelemente anordnen.

Gemäß einer weiteren Ausführungsform ist der Anbaubereich an einem mittleren Bereich der Instrumententafel angeordnet. Der mittlere Bereich der Instrumententafel ist vorzugsweise zwischen Fahrersitz und Beifahrersitz und/oder rechts vom Lenkrad des Kraftfahrzeugs angeordnet. Bei einem Linksfahr-Kraftfahrzeug, bei dem das Lenkrad üblicherweise im Bereich der rechten Hälfte des Kraftfahrzeugs angeordnet ist, kann der mittlere Bereich der Instrumententafel auch links vom Lenkrad angeordnet sein. Dieser Bereich ist besonders gut für die Anordnung des Anbau-Bedienmoduls geeignet, da auf diese Weise die Sicht des Fahrers nach außen nicht verdeckt wird, sich das Anbau-Bedienmodul aber trotzdem in bequemer Griffreichweite des Fahrers befindet.

In einer bevorzugten Ausführungsvariante umfasst der mittlere Bereich der Instrumententafel einen oberen Teilbereich, der einen Anzeigebildschirm aufweist. Weiter umfasst der mittlere Bereich der Instrumententafel einen unteren Teilbereich, der mehrere Bedienelemente aufweist, wobei der Anbaubereich an einem, in Vorwärtsfahrtrichtung gesehen, rechten äußeren Randbereich des unteren Teilbereichs angeordnet ist. Der Anzeigebildschirm und die Bedienelemente können beispielsweise Teil eines Infotainment-Systems des Kraftfahrzeugs sein. Eine Anordnung des Anbaubereichs in der Nähe des Anzeigebildschirms und der Bedienelemente bewirkt, dass das Anbau-Bedienmodul in einem für den Nutzer zentralen Bedienbereich angeordnet ist, sodass Funktionen auf einen Blick eingesehen und verwendet werden können, und dadurch eine Ablenkung des Nutzers reduziert werden kann. Das Vorsehen des Anbaubereichs am rechten äußeren Randbereich des unteren Teilbereichs ist besonders vorteilhaft, da dieser Bereich noch in Griffweite des Fahrers ist, dort in der Regel freier Bauraum zur Verfügung steht, und keine weiteren Bedienelemente oder Anzeigen der Instrumententafel von dem Anbau-Bedienmodul verdeckt werden.

Vorstehend wurde bereits festgestellt, dass das Kraftfahrzeug ein Nutzfahrzeug sein kann. Das Nutzfahrzeug umfasst zur Durchführung von Arbeitsfunktionen einen Aufbau, eine sog. Aufbauer-Funktion und/oder ein Nebenaggregat. Das ausgewählte Anbau-Bedienmodul ist zur Steuerung des Aufbaus, der Aufbauer-Funktion und/oder des Nebenaggregats verwendbar und/oder wird zur Steuerung der Aufbauer-Funktion und/oder des Nebenaggregats verwendet. Wie zuvor beschrieben, werden insbesondere zur Steuerung von Aufbauer-Funktionen und/oder Nebenaggregaten von Nutzfahrzeugen eine Vielzahl unterschiedlicher Steuerungsmöglichkeiten benötigt, die sich nach den Anforderungen der jeweiligen, vom Nutzfahrzeug zu erfüllenden Aufgabe, richten. Wird der dazu benötigte Bedienbereich mittels des vorgestellten Verfahrens hergestellt, können entsprechend Zeit und Kosten eingespart werden. Ferner wird ein übersichtlicher Cockpit-Bereich ermöglicht.

Gemäß einer weiteren Ausführungsform ist die Datenschnittstelle des Anbaubereichs eine Datenschnittstelle zu einem Datenbus, vorzugsweise CAN-Datenbus, des Kraftfahrzeugs. Ein derartiger Datenbus ist in nahezu allen modernen Kraftfahrzeugen zur Steuerung verschiedener Fahrzeugfunktionen vorhanden. Durch die Anbindung der Datenschnittstelle an einen solchen Datenbus können Steuerfunktionen des ausgewählten Anbau-Bedienmoduls direkt über den Datenbus übertragen werden, sodass zusätzliche Signalkabel, und damit Kosten und Gewicht des Kraftfahrzeugs, eingespart werden können.

Gemäß einer weiteren Ausführungsform ist die Bedienfunktionen des ausgewählten Anbau-Bedienmoduls mittels einer Konfigurationsschnittstelle konfigurierbar, mittels derer Bedien- und/oder Steuerfunktionen mindestens eines Bedienelements des ausgewählten Anbau-Bedienmoduls festlegbar und/oder veränderbar sind. Dies ermöglicht es, das Anbau-Bedienmodul besonders einfach und flexibel an die gewünschte Bedien- und/oder Steuerfunktion anpassen zu können. Die Bedien- und/oder Steuerfunktionen können für das jeweilige Bedienelement permanent festgelegt sein, oder sich je nach Situation ändern. Beispielsweise kann einer Taste während das Fahrzeug im Ruhemodus geparkt ist, eine andere Funktion zugewiesen sein, als während des Fahrbetriebs.

In einem Ausführungsbeispiel kann die Konfigurationsschnittstelle durch ein Infotainment-System des Kraftfahrzeugs und/oder durch ein mobiles Endgerät bereitgestellt werden und/oder bedienbar sein. Die Konfiguration kann entsprechend kabelgebunden, z. B. mittels eines Datenbusses, oder kabellos, z. B. via einer Functions-over-the-Air Schnittstelle, vorgenommen werden. Beispielsweise kann das Anbau-Bedienmodul eine Favoriten-Taste aufweisen, die mittels der Konfigurationsschnittstelle mit einer vom Nutzer favorisierten Funktion belegt werden kann. Auf diese Weise wird dem Nutzer eine besonders einfache und komfortable Anpassungsmöglichkeit des Anbau-Bedienmoduls bereitgestellt. Die Konfiguration kann für das Fahrzeug global vorgenommen werden. Ebenso ist es möglich, dass die Konfiguration zumindest zum Teil für einzelne Nutzer individuell festgelegt werden, wenn sich der Nutzer, z. B. mittels eines individuellen Schlüssels, im Fahrzeug identifizieren kann. Die Konfigurationsschnittstelle kann als Programmierschnittstelle ausgeführt sein. Über die Konfigurationsschnittstelle kann z. B. ein Not-Aus-Schalter eines Anbau-Bedienmoduls mit der entsprechenden Not-Aus-Funktion des Nebenaggregats oder der Aufbauer-Funktion signaltechnisch verknüpft werden.

Gemäß einer weiteren Ausführungsform sind die unterschiedlichen Anbau-Bedienmodule an der Befestigungsschnittstelle zur mechanischen Halterung mittels einer Steck-, Klemm- und/oder Rastverbindung halterbar. Die Steck-, Klemm- und/oder Rastverbindung ist vorzugsweise sicherbar, zum Beispiel mittels einer Sicherungsschraube, eines Sicherungsbügels oder eines Sicherungshakens. Eine solche Halterung bietet den Vorteil einer besonders einfachen und doch sicheren Befestigung. Besonders bevorzugt kann ein Anbau-Bedienmodule an der Befestigungsschnittstelle zur mechanischen Halterung werkzeuglos befestigt werden. Die Halterung kann bevorzugt lösbar ausgeführt sein, sodass das Anbau-Bedienmodul bei Bedarf abgenommen und z. B. ausgetauscht werden kann.

Gemäß einem weiteren Aspekt der vorliegenden Offenbarung soll der Modulbaukasten zur Herstellung eines konfigurierbaren Bedienbereichs im Bereich einer Instrumententafel eines Kraftfahrzeugs, vorzugsweise Nutzfahrzeugs, wie hierin beschrieben, auch als Gegenstand (Vorrichtung) *per* se offenbart und beanspruchbar sein, d. h. auch unabhängig vom Verfahren beanspruchbar sein.

Der Modulbaukasten umfasst mehrere unterschiedliche Anbau-Bedienmodule. Die mehreren unterschiedlichen Anbau-Bedienmodule weisen bevorzugt jeweils eine erste Befestigungsschnittstelle zur form- und/oder kraftschlüssigen Befestigung des Anbau-Bedienmoduls an dem vorbestimmten Anbaubereich der Instrumententafel, und eine Strom- und/oder Datenschnittstelle auf, die mit der Strom- und/oder Datenschnittstelle des vorbestimmten Anbaubereichs der Instrumententafel koppelbar ist.

Die mehreren unterschiedlichen Anbau-Bedienmodule des Modulbaukastens umfassen zumindest eines der Anbau-Bedienmodule, wie sie in diesem Dokument beschrieben sind.

Um Wiederholungen zu vermeiden, wird auf die Ausführungsformen und auf die Vorteile verwiesen, die bereits im Rahmen des Verfahrens beschrieben wurden. Mit anderen Worten sollen die in diesem Dokument im Zusammenhang mit dem Verfahren an sich beschriebenen Merkmalen auch im Zusammenhang mit dem Modulbaukasten offenbart und beanspruchbar sein. Insgesamt kann mit dem Modulbaukasten eine einfache, effiziente und flexible Einrichtung eines konfigurierbaren Bedienbereichs im Bereich einer Instrumententafel eines Kraftfahrzeugs bereitgestellt werden.

Gemäß einem weiteren Aspekt der vorliegenden Offenbarung wird ein Kraftfahrzeug bereitgestellt. Das Kraftfahrzeug umfass einen konfigurierbaren Bedienbereich im Bereich einer Instrumententafel des Kraftfahrzeugs, der gemäß einem der zuvor beschriebenen Verfahren hergestellt ist. Bevorzugt ist das Kraftfahrzeug ein Nutzfahrzeug (z. B. ein Lastkraftwagen oder Omnibus). Hierbei kann unter einem Nutzfahrzeug im Allgemeinen ein Fahrzeug verstanden werden, das durch seine Bauart und Einrichtung speziell zur Beförderung von Personen, zum Transport von Gütern oder zum Ziehen von Anhängerfahrzeugen ausgelegt ist. Das Nutzfahrzeug umfasst bevorzugt einen Aufbau, Aufbauerfunktion und/oder ein Nebenaggregat (Zusatzaggregat).

Um Wiederholungen zu vermeiden, wird auf die Ausführungsformen und auf die Vorteile verwiesen, die bereits im Rahmen des Verfahrens beschrieben wurden. Mit anderen Worten sollen die in diesem Dokument im Zusammenhang mit dem Verfahren an sich beschriebenen Merkmalen auch im Zusammenhang mit dem Kraftfahrzeug als beanspruchter Gegenstand offenbart und beanspruchbar sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockdiagramm eines Verfahrens zur Herstellung eines konfigurierbaren Bedienbereichs gemäß einer Ausführungsform;
- Figur 2: eine schematische Illustration einer Instrumententafel mit einem konfigurierbaren Bedienbereich und eines Modulbaukastens gemäß einer weiteren Ausführungsform;
- Figur 3: eine schematische Illustration einer Instrumententafel mit einer Befestigungs- und einer Strom- und/oder Datenschnittstelle gemäß einer weiteren Ausführungsform; und
- Figur 4: eine schematische Illustration eines Kraftfahrzeugs mit einem konfigurierbaren Bedienbereich gemäß einer weiteren Ausführungsform der Erfindung.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

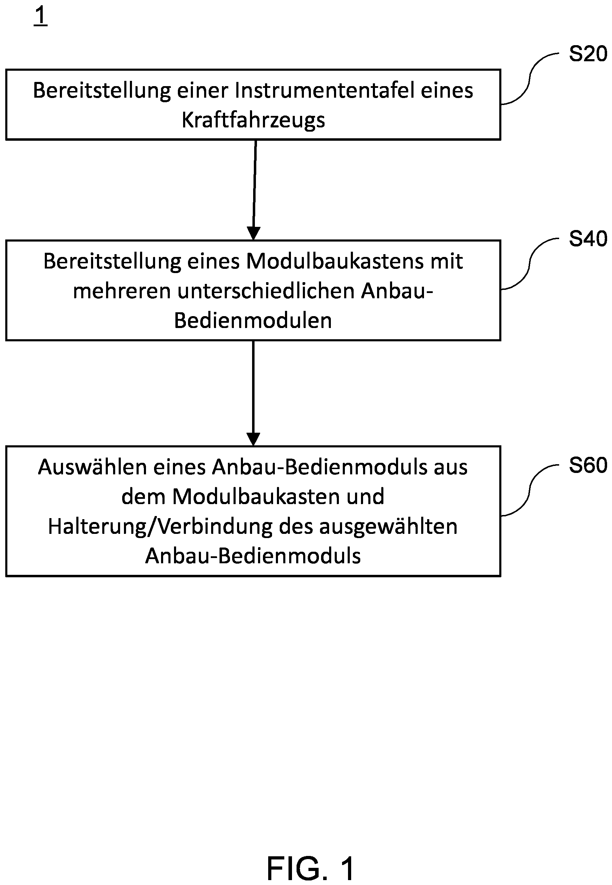

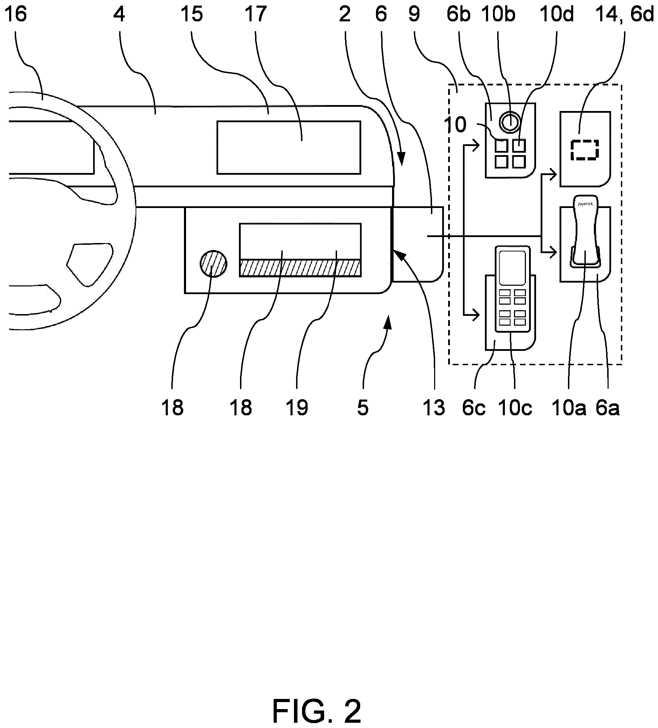

Figur 1 zeigt ein schematisches Blockdiagramm eines Verfahrens zur Herstellung eines konfigurierbaren Bedienbereichs gemäß einer Ausführungsform. Das Verfahren wird nachfolgend ferner unter Bezugnahme auf die Figuren 2 bis 4 näher beschrieben.

Das in Figur 1 gezeigte Verfahren 1 zur Herstellung eines konfigurierbaren Bedienbereichs im Bereich einer Instrumententafel eines Kraftfahrzeugs, vorzugsweise eines Nutzfahrzeugs, umfasst zunächst den Schritt S20, bei welchem eine Instrumententafel des Kraftfahrzeugs bereitgestellt wird, die einen vorbestimmten Anbaubereich zur Realisierung eines konfigurierbaren Bedienbereichs aufweist. In dem konfigurierbaren Bedienbereich sollen, z. B. nachträglich, Bedienelemente angeordnet werden, mit denen Aufbauer-Funktionen und/oder ein Nebenaggregat des Kraftfahrzeugs gesteuert werden können, die später, also nicht ab Werk verbaut werden.

Figur 2 zeigt schematisch und lediglich beispielhaft eine solche Instrumententafel 4 des Kraftfahrzeugs. Die Instrumententafel 4 umfasst einen vorbestimmten Anbaubereich 5, der zur Realisierung des konfigurierbaren Bedienbereichs 2 vorgesehen ist. Beispielhaft befindet sich der vorbestimmte Anbaubereich 5 hier an einem mittleren Bereich 15 der Instrumententafel 4, rechts vom Lenkrad 16. Der mittlere Bereich 15 der Instrumententafel 4 umfasst hier, lediglich beispielhaft, einen oberen Teilbereich, der einen Anzeigebildschirm 17 aufweist, und einen unteren Teilbereich, der mehrere Bedienelemente 18 aufweist. Der Anzeigebildschirm 17 und die Bedienelemente 18 können zum Beispiel Teil eines Infotainment-Systems des Kraftfahrzeugs sein.

Der Anbaubereich 5 ist am rechten äußeren Randbereich 13 des unteren Teilbereichs angeordnet. Am Anbaubereich 5 soll eine Bedienvorrichtung angebaut werden (bezeichnet als Anbau-Bedienelement), welches Bedienoptionen bereitstellt, um z. B. Aufbauer-Funktionen und/oder ein Zusatzaggregat des Kraftfahrzeugs zu steuern. Ein am Anbaubereich 5 angeordnetes Anbau-Bedienelement befindet sich in Griffweite des Fahrers, beeinträchtigt jedoch nicht die Sichtlinie des Fahrers nach draußen.

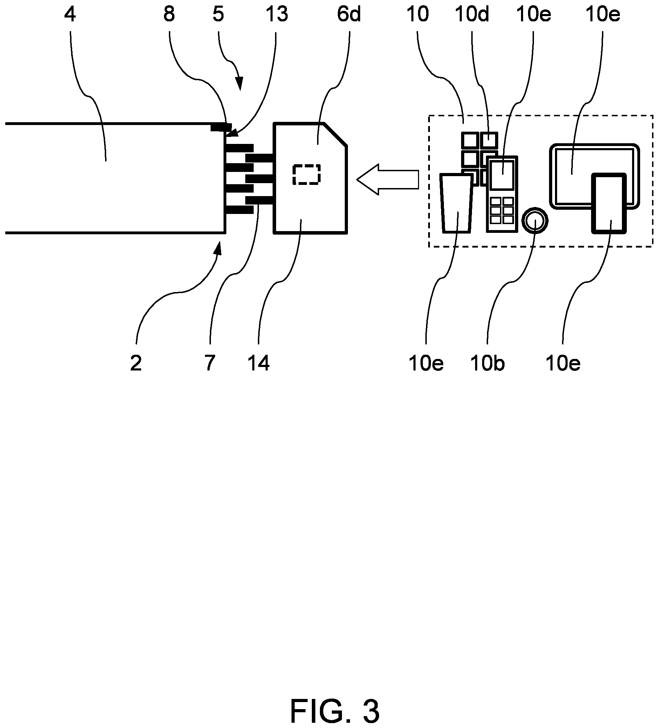

Um ein Anbau-Bedienelement einfach, vorzugsweise werkzeuglos, am Anbaubereich 5 anbauen zu können, umfasst der Anbaubereich 5, der hier lediglich stark schematisiert dargestellt ist, eine (nicht dargestellte) Befestigungsschnittstelle zur mechanischen Halterung des Anbau-Bedienmoduls und eine Stromschnittstelle, um das Anbau-Bedienelement mit Strom bzw. Spannung zu versorgen. Der Anbaubereich 5 kann ferner eine Datenschnittstelle aufweisen. Die Strom- und Datenschnittstelle kann auch als kombinierte Strom-Datenschnittstelle, ausgeführt sein, z. B. als USB-Schnittstelle. Die Befestigungsschnittstelle und die Strom- und/oder Datenschnittstelle werden im Rahmen der Figur 3 schematisch beschrieben.

Um den Bedienbereich 2 möglichst flexibel konfigurieren zu können, wird in Schritt S40 des Verfahrens ein Modulbaukasten bereitgestellt, der mehrere unterschiedliche Anbau-Bedienmodule umfasst. Die Anbau-Bedienmodule sind jeweils derart ausgestaltet, dass sie an der Befestigungsschnittstelle halterbar und mit der Strom- und/oder Datenschnittstelle verbindbar sind. Das heißt der Modulbaukasten umfasst mehrere, voneinander verschiedene Anbau-Bedienmodule, die zum Beispiel für eine Durchführung unterschiedlicher Aufgaben geeignet sind, aus denen ein Nutzer je nach Bedarf auswählen kann.

Figur 2 zeigt schematisch den Modulbaukasten 9, der hier mehrere unterschiedliche Anbau-Bedienmodule 6, lediglich beispielhaft, z. B. die vier unterschiedlichen Anbau-Bedienmodul 6a - 6d, umfasst, die wahlweise ausgewählt werden können, um an dem Anbaubereich 5 angebaut zu werden.

Der dargestellte Modulbaukasten 9 umfasst z. B. ein Anbau-Bedienmodul 6a mit einem schwenkbaren Bedienhebel 10a, der im dargestellten Beispiel als Joystick ausgeführt ist. Mit einem solchen Bedienhebel können beispielsweise Hebebühnen, hydraulische Frontlader, Kranaufbauten oder Arbeitsarme gesteuert werden.

Das Anbau-Bedienmodul 6b umfasst mehrere Tasten 10d, zum Beispiel Displaytasten, und einen Not-Aus-Schalter 10b, vorzugsweise zum Ausschalten eines Nebenaggregats und/oder einer Aufbauer-Funktion eines Nutzfahrzeugs. Die Display-Tasten können z. B. zur Steuerung bestimmter Aufbauer-Funktionen verwendet werden und hierfür nach dem Anbau des Anbau-Bedienmoduls entsprechend über ihr Display beschriftet und signaltechnisch mit den entsprechenden Aufbauer-Funktionen verbunden werden.

Das Anbau-Bedienmodul 6c umfasst eine Halterung 10c für ein Mobilgerät, z. B. für ein Smartphone oder ein Tablet-Computer, das programmtechnisch eingerichtet ist, Aufbauer-Funktionen und/oder ein Nebenaggregat des Kraftfahrzeugs zu steuern.

Die unterschiedlichen Anbau-Bedienmodule 6a, 6b, 6c können beispielsweise jeweils einen Grundkörper 14 aufweisen, der vorzugsweise für alle unterschiedlichen Anbau-Bedienmodule die gleiche Länge und/oder Höhe aufweist und in den Schnittstellen integriert sind, die korrespondierend mit den Schnittstellen des Anbaubereichs 6 verbunden werden können.

Der Modulbaukasten 9 kann auch ein konfigurierbares Anbau-Bedienmodul 6d umfassen, das wiederum den Grundkörper 14 aufweist, sowie eine oder mehrere Halterungen (hier als gestrichelte Linie schematisch illustriert), auf die wahlweise unterschiedliche Bedienelemente, 10 z. B. Displaytaster, Drehknöpfe, Bedienhebel etc. angebracht werden können, so dass das Anbau-Bedienelement 6d flexibel zusammengestellt (konfiguriert) werden kann.

Je nachdem, mit welchem Zusatzaufbau oder Zusatzaggregat das Kraftfahrzeug für den Endkunden ausgestattet wird, müssen, abhängig vom jeweiligen Zusatzaufbau oder Zusatzaggregat, entsprechende Bedienelemente zur Steuerung im Cockpit-Bereich (nachträglich) bereitgestellt werden, die nicht ab Werk verbaut werden (können).

Vorteilhaft kann hierfür auf einfache Weise ein geeignetes Anbau-Bedienelement aus dem Modulbaukasten 9 ausgewählt oder konfiguriert und eingebaut werden. Entsprechend folgt in Schritt S60 des Verfahrens das Auswählen eines Anbau-Bedienmoduls 6 aus dem Modulbaukasten 9 und die Halterung des ausgewählten Anbau-Bedienmoduls an der Befestigungsschnittstelle. Je nach ausgewählten Anbau-Bedienmodul erfolgt außerdem eine Verbindung des ausgewählten Anbau-Bedienmoduls mit der Strom- und/oder Datenschnittstelle des Anbaubereichs 5.

Vorteilhaft bietet das erfindungsgemäße Verfahren die Möglichkeit, eine Instrumententafel 4 des Kraftfahrzeugs modular und flexibel um einen konfigurierbaren Bedienbereich 2 zu erweitern, in dem ein geeignetes Anbau-Bedienmodul 6a-6d aus dem Modulbaukasten 9 ausgewählt und am vorbestimmten Anbaubereich 5 angebaut, z. B. gehaltert, wird. Dies bietet eine einfache und mit geringem Aufwand verbundene Möglichkeit, um zusätzliche und/oder nachträglich benötigte Bedienelemente und/oder Bedienfunktionen in die Instrumententafel zu integrieren, vorzugsweise zur Steuerung von Aufbauten, Nebenaggregaten und/oder von Arbeitsfunktionen des Kraftfahrzeugs. Die an dem Anbaubereich vorgesehenen Schnittstellen ermöglichen eine schnelle mechanische Halterung und Anbindung an eine Stromversorgung und/oder Datenkommunikation, ohne dass hierfür zusätzliche Halterungen angebracht, Leitungen verlegt oder die Instrumententafel geöffnet werden müsste.

Zusätzlich zu den dargestellten Bedienelementen 10 können auch beliebige andere Bedienelemente oder Kombinationen von Bedienelementen 10 an dem Anbau-Bedienmodul 6 angeordnet sein. Beispielsweise kann ein Anbau-Bedienmodul nur einen Not-Aus-Schalter 10b oder einen Not-Aus-Schalter 10b und einen beweglichen Bedienhebel 10a umfassen. Anbau-Bedienmodule 6, die ausschließlich Tasten 10d umfassen, oder Anbau-Bedienmodule 6 mit einem Display, zum Beispiel einem Touch-Display, sind beispielsweise ebenfalls möglich. Der Bedienbereich ist je nach Wünschen des Nutzers auf verschiedene Weisen realisierbar, d. h., es handelt sich um einen konfigurierbaren Bedienbereich, der durch Auswahl und/oder Zusammenstellung eines geeigneten Anbau-Bedienmoduls aus dem Modulbaukastens 9 konfiguriert werden kann, ohne dass größere Umbauten (z. B. Öffnen der Instrumententafel, Verlegung von zusätzlichen Kabeln etc.) erforderlich sind.

Die Funktion der jeweiligen Bedienelemente 10 kann von Beginn an festgelegt sein, oder zum Beispiel mittels einer Konfigurationsschnittstelle 19 konfigurierbar sein. Die Konfigurationsschnittstelle 19 kann z. B. über das Infotainment-System des Kraftfahrzeugs bereitgestellt werden. Eine Konfiguration mittels eines (nicht dargestellten) mobilen Endgeräts und z. B. einer Datenübertragung via einer Functions-over-the-Air-Schnittstelle wäre ebenso möglich. Die Konfigurierbarkeit der Funktion der Bedienelemente 10 ermöglicht eine weitere Anpassung des konfigurierbaren Bedienbereichs 2 an die jeweiligen Bedürfnisse des Benutzers. Eine weitere Individualisierung kann beispielsweise erfolgen, indem sich einzelne Nutzer individuell am Kraftfahrzeug anmelden können, z. B. mittels eines individuellen Schlüssels oder mittels einer Fahrerkarte, und die von den Bedienelementen ausgeführten Funktionen vollständig oder teilweise vom jeweiligen Nutzer individuell angepasst und gespeichert werden können.

Figur 3 zeigt eine weitere schematische Darstellung einer Instrumententafel 4 mit einem konfigurierbaren Bedienbereich 2 eines Kraftfahrzeugs. Figur 3 zeigt eine weitere Ausführungsform des Modulbaukasten 9, der wiederum ein konfigurierbares Anbau-Bedienmodul 6d umfasst, welches wahlweise mit unterschiedlichen Bedienelementen 10 bestückbar ist, d. h. ausgestattet werden kann. Wie bereits beschrieben, kann ein Anbau-Bedienmodul 6d ausgewählt oder zusammengestellt werden, das unterschiedliche Bedienelemente 10 umfassen kann. In der Figur 3 sind lediglich beispielhaft ein Not-Aus-Schalter 10b, ein Tastenfeld mit mehreren Tasten 10d, zum Beispiel Hubtasten und/oder Displaytasten, dargestellt. Weitere Bedienelemente 10e, zum Beispiel (Touch-)Displays, Track-Pads, 3D-Mäuse, zum Beispiel Trackballs, oder zusätzliche Ablagen können ebenso verwendet werden.

In Figur 3 ist zu sehen, dass der Anbaubereich 5 eine Befestigungsschnittstelle 7 zur mechanischen Halterung bzw. Fixierung und eine Strom- und/oder Datenschnittstelle 8 für das Anbau-Bedienmodul 6d aufweist. Die Befestigungsschnittstelle 7 kann zum Beispiel als Steck-, Klemm-, und/oder Rastverbindung ausgeführt sein. Besonders bevorzugt ist die Verbindung als lösbare Verbindung ausgeführt, sodass das Anbau-Bedienmodul 6d bei Bedarf abgenommen und zum Beispiel gegen ein anderes ausgetauscht werden kann. Die Befestigungsschnittstelle ist bevorzugt robust ausgeführt, sodass eine sichere Halterung des Anbau-Bedienmoduls auch bei stärkeren Vibrationen Aufprallschocks gegeben ist. Die Befestigungsschnittstelle kann beispielsweise eine Dämpfung, z. B. eine Gummidämpfung, umfassen, sodass eventuell störende Vibrationsgeräusche unterbunden werden können.

Die Stromschnittstelle 8 kann als Strom- und/oder Spannungsversorgung ausgestaltet sein. Die Datenschnittstelle 8 kann beispielsweise eine Datenschnittstelle zu einem Datenbus, zum Beispiel einem in Kraftfahrzeugen oftmals vorhandenen CAN-Datenbus, sein. Ist eine Strom- und eine Datenschnittstelle 8 vorhanden, kann die Schnittstelle als integrierte Steckverbindung (wie von USB-Steckverbindungen bekannt) ausgeführt sein, oder es können separate Schnittstellen verwendet werden.

Es versteht sich, dass die unter Bezugnahme auf die Figur 3 beschriebenen Techniken und Merkmale mit den Techniken und Merkmalen, die unter Bezugnahme auf die Figuren 1 und 2 beschrieben sind, kombinierbar sind, einzeln oder in jeglicher Kombination.

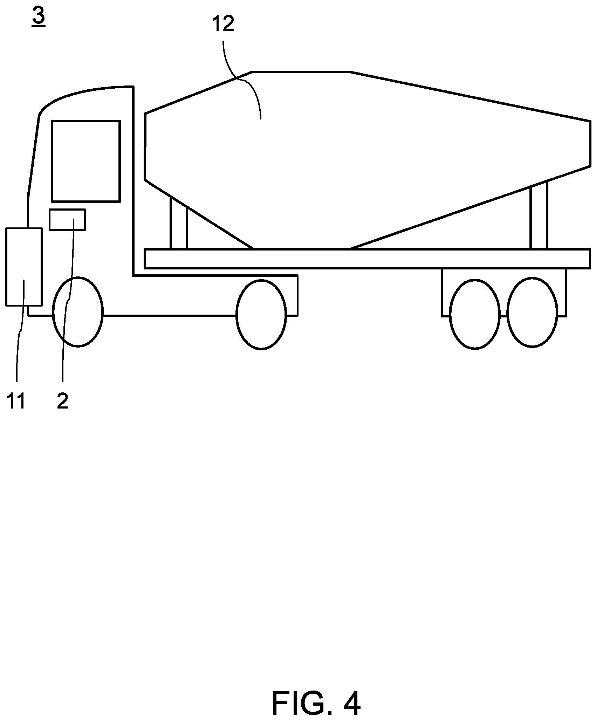

Figur 4 zeigt ein Kraftfahrzeug 3 mit einem konfigurierbaren Bedienbereich 2, der nach dem zuvor beschriebenen Verfahren hergestellt wurde. Beispielhaft ist das Kraftfahrzeug 3 als Nutzfahrzeug, hier mit einem Betonmischer als Aufbauer-Funktion 12, dargestellt. Zusätzlich oder alternativ kann das Kraftfahrzeug 3 ein Nebenaggregat 11 umfassen. Beispielhaft ist das Nebenaggregat 11 im dargestellten Beispiel im vorderen Bereich des Kraftfahrzeugs 3 angeordnet. Sowohl das Nebenaggregat, als auch die Aufbauer-Funktion 12 können aber auch an beliebiger anderer Stelle im Außen- oder Innenbereich des Kraftfahrzeugs angeordnet sein. Ebenso könnte das Kraftfahrzeug 3 mehr und/oder weniger als ein Nebenaggregat 11 und/oder mehr oder weniger als eine Aufbauer-Funktion 12 umfassen.

Es versteht sich, dass die unter Bezugnahme auf die Figur 4 beschriebenen Techniken und Merkmale mit den Techniken und Merkmalen, die unter Bezugnahme auf die Figuren 1 bis 3 beschrieben sind, kombinierbar sind, einzeln oder in jeglicher Kombination. Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Verfahren
- 2: Bedienbereich
- 3: Kraftfahrzeug
- 4: Instrumententafel
- 5: Anbaubereich
- 6: Anbau-Bedienmodul
- 6a: Anbau-Bedienmodul mit schwenkbarem Bedienhebel
- 6b: Anbau-Bedienmodul mit Halterung
- 6c: Anbau-Bedienmodul mit Tasten und Not-Aus-Schalter
- 6d: Konfigurierbares Anbau-Bedienmodul
- 7: Befestigungsschnittstelle
- 8: Strom- und/oder Datenschnittstelle
- 9: Modulbaukasten
- 10: Bedienelement des Bedienmoduls
- 10a: Bedienhebel
- 10b: Not-Aus-Schalter
- 10c: Halterung
- 10d: Tasten
- 10e: Sonstige Bedienelemente
- 11: Nebenaggregat
- 12: Aufbauer-Funktion
- 13: Rechter äußerer Randbereich des mittleren Bereichs
- 14: Grundkörper
- 15: Mittlerer Bereich der Instrumententafel
- 16: Lenkrad
- 17: Anzeigebildschirm
- 18: Bedienelement der Instrumententafel
- 19: Konfigurationsschnittstelle

## Patentansprüche

1. Verfahren (1) zur Herstellung eines konfigurierbaren Bedienbereichs (2) im Bereich einer Instrumententafel (4) eines Kraftfahrzeugs (3), vorzugsweise Nutzfahrzeugs, umfassend:
Bereitstellung (S20) einer Instrumententafel (4) des Kraftfahrzeugs (3), wobei die Instrumententafel (4) einen vorbestimmten Anbaubereich (5) zur Realisierung des konfigurierbaren Bedienbereichs (2) aufweist, wobei der Anbaubereich (5) eine Befestigungsschnittstelle (7) zur mechanischen Halterung eines Anbau-Bedienmoduls (6) und eine Strom- und/oder Datenschnittstelle (8) für das Anbau-Bedienmodul (6) aufweist; und
Bereitstellung (S40) eines Modulbaukastens (9), umfassend mehrere unterschiedliche Anbau-Bedienmodule (6a; 6c; 6e), die an der Befestigungsschnittstelle (7) halterbar und mit der Strom- und/oder Datenschnittstelle (8) verbindbar sind; und
Auswählen (S60) eines Anbau-Bedienmoduls (6a; 6c; 6e) aus dem Modulbaukasten (9), Halterung des ausgewählten Anbau-Bedienmoduls (6a; 6c; 6e) an der Befestigungsschnittstelle (7) und Verbindung des ausgewählten Anbau-Bedienmoduls (6a; 6c; 6e) mit der Strom- und/oder Datenschnittstelle (8) des Anbaubereichs (5).

2. Verfahren (1) nach Anspruch 1, wobei die mehreren unterschiedlichen Anbau-Bedienmodule (6a; 6c; 6e) zumindest eines der folgenden Anbau-Bedienmodule (6a; 6c; 6e) umfasst:
- ein Anbau-Bedienmodul (6a) mit einem schwenkbaren Bedienhebel (10a), vorzugsweise mit einem Joystick;
- ein Anbau-Bedienmodul, aufweisend einen Not-Aus-Schalter (10b), vorzugsweise zum Ausschalten eines Nebenaggregats (11) und/oder einer Aufbauer-Funktion (12) eines Nutzfahrzeugs;
- ein Anbau-Bedienmodul (6c), aufweisend eine Halterung (10c) für ein Mobilgerät, beispielweise eine Smartphone oder ein Tablet-Computer;
- ein Anbau-Bedienmodul, aufweisend mehrere Tasten (10d), vorzugsweise Hubtasten und/oder Display-Tasten; und
- ein Anbau-Bedienmodul (6e), aufweisend mehrere Tasten (10d), vorzugsweise Hubtasten und/oder Display-Tasten, und einen Not-Aus-Schalter (10b), vorzugsweise zum Ausschalten eines Nebenaggregats (11) und/oder einer Aufbauer-Funktion (12) eines Nutzfahrzeugs.

3. Verfahren (1) nach einem der vorherigen Ansprüche,
wobei die unterschiedlichen Anbau-Bedienmodule (6) jeweils einen plattenförmigen Grundkörper (14) aufweisen, der vorzugsweise für alle unterschiedlichen Anbau-Bedienmodule (6) die gleiche Länge und/oder Höhe aufweist.

4. Verfahren (1) nach einem der vorherigen Ansprüche,
wobei der Anbaubereich (5) an einem mittleren Bereich (15) der Instrumententafel (4) angeordnet ist, der vorzugsweise zwischen Fahrersitz und Beifahrersitz und/oder rechts vom Lenkrad (16) des Kraftfahrzeugs (3) angeordnet ist.

5. Verfahren (1) nach Anspruch 4,
wobei der mittlere Bereich (15) der Instrumententafel (4) einen oberen Teilbereich, der einen Anzeigebildschirm (17) aufweist, und einen unteren Teilbereich, der mehrere Bedienelemente (18) aufweist, umfasst, wobei der Anbaubereich (5) an einem, in Vorwärtsfahrtrichtung gesehen, rechten äußeren Randbereich (13) des unteren Teilbereichs angeordnet ist.

6. Verfahren (1) nach einem der vorherigen Ansprüche,
wobei das Kraftfahrzeug (3) ein Nutzfahrzeug ist, aufweisend eine Aufbauer-Funktion (12) und/oder ein Nebenaggregat (11), und das ausgewählte Anbau-Bedienmodul (6a; 6c; 6e) zur Steuerung der Aufbauer-Funktion (12) und/oder des Nebenaggregats (11) verwendbar ist und/oder verwendet wird.

7. Verfahren (1) nach einem der vorherigen Ansprüche,
wobei die Datenschnittstelle (8) eine Datenschnittstelle zu einem Datenbus, vorzugsweise CAN-Datenbus, des Kraftfahrzeugs (3) ist.

8. Verfahren (1) nach einem der vorherigen Ansprüche,
wobei Bedienfunktionen des ausgewählten Anbau-Bedienmoduls (6a; 6c; 6e) mittels einer Konfigurationsschnittstelle (19) konfigurierbar ist, mittels derer Bedien- und/oder Steuerfunktionen mindestens eines Bedienelements (10) des ausgewählten Anbau-Bedienmoduls (6a; 6c; 6e) festlegbar und/oder veränderbar sind.

9. Verfahren (1) nach Anspruch 8,
wobei die Konfigurationsschnittstelle (19) durch ein Infotainment-System des Kraftfahrzeugs (3) und/oder durch ein mobiles Endgerät bereitgestellt wird und/oder bedienbar ist.

10. Verfahren (1) nach einem der vorherigen Ansprüche,
wobei die unterschiedlichen Anbau-Bedienmodule (6) an der Befestigungsschnittstelle (7) zur mechanischen Halterung mittels einer, vorzugsweise sicherbaren, Steck, Klemm- und/oder Rastverbindung halterbar sind.

11. Modulbaukasten (9) zur Herstellung eines konfigurierbaren Bedienbereichs (2) im Bereich einer Instrumententafel (4) eines Kraftfahrzeugs (3), vorzugsweise Nutzfahrzeugs, umfassend:
mehrere unterschiedliche Anbau-Bedienmodule (6), jeweils aufweisend eine erste Befestigungsschnittstelle (7) zur form- und/oder kraftschlüssigen Befestigung des Anbau-Bedienmoduls (6) an einem Anbaubereich (5) der Instrumententafel (4), und eine Strom- und/oder Datenschnittstelle (8), wobei die mehreren unterschiedlichen Anbau-Bedienmodule (6a; 6c; 6e) zumindest eines der folgenden Anbau-Bedienmodule (6a; 6c; 6e) umfasst:
- ein Anbau-Bedienmodul (6a) mit einem schwenkbaren Bedienhebel (10a), vorzugsweise mit einem Joystick;
- ein Anbau-Bedienmodul, aufweisend einen Not-Aus-Schalter (10b), vorzugsweise zum Ausschalten eines Nebenaggregats (11) und/oder einer Aufbauer-Funktion (12) eines Nutzfahrzeugs;
- ein Anbau-Bedienmodul (6c), aufweisend eine Halterung (10c) für ein Mobilgerät, beispielweise eine Smartphone oder ein Tablet-Computer;
- ein Anbau-Bedienmodul, aufweisend mehrere Tasten (10d), vorzugsweise Hubtasten und/oder Display-Tasten; und
- ein Anbau-Bedienmodul (6e), aufweisend mehrere Tasten (10d), vorzugsweise Hubtasten und/oder Display-Tasten, und einen Not-Aus-Schalter (10b), vorzugsweise zum Ausschalten eines Nebenaggregats (11) und/oder einer Aufbauer-Funktion (12) eines Nutzfahrzeugs.

12. Kraftfahrzeug (3), vorzugsweise Nutzfahrzeug, umfassend
einen konfigurierbaren Bedienbereich (2) im Bereich einer Instrumententafel (4) des Kraftfahrzeugs (3), der gemäß einem Verfahren (1) der Ansprüche 1 bis 10 hergestellt ist.
